# EUROPÄISCHE PATENTSCHRIFT

(11) **EP 2 633 925 B1**
(45) Veröffentlichungstag und Bekanntmachung des Hinweises auf die Patenterteilung: **03.09.2014**
(21) Anmeldenummer: 12001422.0
(22) Anmeldetag: 02.03.2012
(51) Int. Cl.: B21D 55/00, B30B 15/28, F16P 3/14, B23Q 11/00, B23Q 17/24

(54) **Schwenkbiegemaschine mit einer Überwachungseinrichtung und Verfahren zum Betreiben einer sochen Schwenkbiegemaschine**
Bending machine with a safety device and method for operating such a machine
Presse plieuse avec un dispositif de sécurité et procédé de fonctionnement d'une telle presse plieuse

(43) Veröffentlichungstag der Anmeldung: 04.09.2013
(73) Patentinhaber: Fiessler Elektronik GmbH & Co. KG, 73734 Esslingen (DE)
(72) Erfinder: Fiessler, Götz, 73732 Esslingen (DE)
(74) Vertreter: Kocher, Mark Werner

(56) Entgegenhaltungen:
- EP-A2- 1 387 121
- EP-A2- 1 589 279
- EP-B1- 0 934 131
- FR-A1- 2 686 533

## Beschreibung

Die Erfindung betrifft eine Schwenkbiegemaschine mit einem Maschinenbett, das einen Werkstücktisch mit einer Werkstückauflagefläche umfasst, sowie mit einem beweglich am Maschinenbett angebrachten Werkstückhalter zur Festlegung eines Werkstücks am Werkstücktisch und mit einer schwenkbeweglich dem Werkstücktisch zugeordneten, längs der Werkstückauflagefläche erstreckten Biegewange, die an einander entgegengesetzten Endbereichen jeweils mit einem Schwenkgelenk am Maschinenbett festgelegt ist, wobei Schwenkachsen der Schwenkgelenke konzentrisch zueinander und parallel zur Werkstückauflagefläche ausgerichtet sind, sowie mit einer optischen Überwachungseinrichtung zur Überwachung einer Schwenkbewegung der Biegewange, mit einem optischen Sender zur Aussendung eines Kontrollstrahls und mit einem dem Sender gegenüberliegend angeordneten Empfänger für den Kontrollstrahl. Ferner betrifft die Erfindung ein Verfahren zum Betreiben einer solchen Schwenkbiegemaschine.

Gemäß einem der Anmelderin bekannten, druckschriftlich nicht niedergelegten Stand der Technik ist eine gattungsgemäße Schwenkbiegemaschine, die zum Abkanten von Blechteilen eingesetzt wird, mit einer optischen Überwachungseinrichtung ausgestattet. Die Überwachungseinrichtung ist dazu vorgesehen, während des Umformens des Werkstücks, bei dem die Biegewange relativ zum Werkstücktisch bewegt wird, ein Einklemmen von Gliedmaßen eines Bedieners zu verhindern. Hierbei wird wenigstens eine Seitenfläche eines kubischen Sicherheitsbereichs um die Schwenkbiegemaschine mit einem Lichtgitter oder -vorhang während des Umformvorgangs gesichert. Eine Abschaltung der Schwenkbiegemaschine ist vorgesehen, wenn das Lichtgitter oder der Lichtvorhang vom Benutzer durchbrochen wird, dieser also in den kubischen Sicherheitsbereich um die Schwenkbiegemaschine eingreift.

Die Aufgabe der Erfindung besteht darin, eine Schwenkbiegemaschine und ein Verfahren zum Betreiben einer Schwenkbiegemaschine bereitzustellen, die eine Überwachung des Einspannvorgangs für das Werkstück ermöglicht.

Diese Aufgabe wird gemäß einem ersten Aspekt für eine Schwenkbiegemaschine der eingangs genannten Art mit den Merkmalen des Anspruchs 1 gelöst. Hierbei ist vorgesehen, dass der Sender und der Empfänger den Schwenkgelenken derart zugeordnet sind, dass der Kontrollstrahl zwischen Sender und Empfänger in einem um die Schwenkachse ausgebildeten Hüllzylinder verläuft. Hierdurch wird eine Absicherung eines besonders sicherheitskritischen Bereichs der Schwenkbiegemaschine zwischen dem Werkstücktisch und dem Werkstückhalter ermöglicht. In diesem Bereich können während der Festlegung des Werkstücks mit Hilfe des Werkstückhalters manuelle Eingriffe eines Bedieners notwendig sein, die mit einem erheblichen Verletzungsrisiko aufgrund der Relativbewegung zwischen Werkstückhalter, Werkstück und Werkstücktisch einhergehen. Dieser Bereich kann mit der bekannten Sicherheitseinrichtung nicht überwacht werden, da bekannte Lichtgitter oder Lichtvorhänge aufgrund der Schwenkgelenke der Schwenkbiegemaschine nicht ausreichend nahe an den kritischen Bereich herangeführt werden können.

Bei der erfindungsgemäßen Anordnung des Senders und des Empfängers wird davon ausgegangen, dass der besonders sicherheitskritische Bereich in der nähe der Schwenkachse der Biegewange liegt. Dies ist exemplarisch der Fall, wenn eine automatisierte Verstellung des Werkstückhalters, beispielsweise mit einem elektrischen oder hydraulischen Antrieb, vorgesehen ist und wenn der Benutzer diese automatische Verstellung beispielsweise mit einem Fußtaster aktivieren kann, um während des Einspannvorgangs für das Werkstück die Hände frei zu haben, um das Werkstück positionieren zu können. Insbesondere kann es je nach Art und Größe des Werkstücks notwendig sein, das Werkstück bis zur Festlegung zwischen dem Werkstückhalter und dem Werkstücktisch manuell in der gewünschten Stellung zu halten, insbesondere um es gegenüber dem Werkstückhalter und der Biegewange korrekt auszurichten. Hierbei besteht die Gefahr, dass Körperteile des Bedieners, insbesondere die Finger, zwischen dem Werkstückhalter und dem Werkstück oder zwischen dem Werkstück und dem Werkstücktisch eingeklemmt werden. Bei der erfindungsgemäßen Schwenkbiegemaschine wird diese Einklemmgefahr dadurch reduziert, dass der Kontrollstrahl bei einem gefährlichen Eingriff des Bedieners unterbrochen wird und damit eine Abschaltung der automatisierten Verstellung des Werkstückhalters vorgenommen werden kann. Dabei ist der Hüllzylinder, in dem sich der wenigstens eine Kontrollstrahl ausbreitet, derart in Lage und Größe relativ zur Schwenkachse der Schwenkbiegemaschine angeordnet, dass möglichst eine große Vielzahl von möglichen Bedienfehlern abgefangen werden kann. Der Hüllzylinder kann konzentrisch oder exzentrisch zur Schwenkachse der Biegewange angeordnet sein. Der Hüllzylinder weist vorzugsweise einen Durchmesser auf, der bis zur zehnfachen Materialstärke des von der Schwenkbiegemaschine bearbeitbaren Materials beträgt. Besonders bevorzugt ist der Hüllzylinder konzentrisch zur Schwenkachse der Biegewange angeordnet und weist einen Durchmesser auf, der das sich aus der Summe der maximal von der Schwenkbiegemaschine bearbeitbaren Materialstärke und einer vorgebbaren, insbesondere genormten, Mindestspaltweite für einen sicheren manuellen Eingriff zwischen Werkstückhalter und Werkstück errechnet. Bei der erfindungsgemäßen Schwenkbiegemaschine kann somit auch während des Einspannvorgangs des Werkstücks unmittelbar an der Schwenkbiegemaschine die Position des Werkstücks beeinflusst werden, wobei die Handhabung des Werkstücks durch den Bediener während des Einspannvorgangs mittels des wenigstens einen Kontrollstrahls abgesichert wird.

Vorteilhafte Weiterbildungen der Erfindung sind Gegenstand der Unteransprüche.

Zweckmäßig ist es, wenn der Sender in einem ersten Schwenkgelenk der Biegewange und der Empfänger einem zweiten Schwenkgelenk der Biegewange angeordnet sind. Hierdurch ist eine raumökonomische Integration des Senders und des Empfängers in die Schwenkbiegemaschine gewährleistet. Vorzugsweise sind die Schwenkgelenke jeweils mit Hohlachsen ausgerüstet. In den Hohlachsen sind senderseitig zumindest die für die Aussendung des oder der Kontrollstrahlen notwendigen Strahlungsquellen, bei denen es sich insbesondere um Laserdioden handeln kann, und empfängerseitig die für den Empfang des oder der Kontrollstrahlen notwendigen Empfangsmittel, bei denen es sich insbesondere um lichtempfindliche Dioden oder Transistoren handeln kann, angeordnet. Gegebenenfalls sind in den Schwenkgelenken auch Ansteuerungs- und Verstärkerschaltungen für die Strahlungsquellen und/oder für die Empfangsmittel angeordnet. Durch diese Anordnung des oder der Sender sowie des oder der Empfänger kann der sicherheitskritische Bereich zwischen den Schwenkgelenken zweckmäßig überwacht werden, ohne dass Einschränkungen für die Beweglichkeit der Biegewange oder die Handhabung des Werkstücks in Kauf genommen werden müssen. Vorzugsweise sind sowohl der Sender als auch der Empfänger mit einer Steuereinrichtung verbunden, die zur Bereitstellung von Energie an den Antrieb des Werkstückhalters ausgebildet ist und die ferner für die Überwachung des Senders und des Empfängers eingerichtet ist. Somit kann die Steuereinrichtung gegebenenfalls eine Freigabe von Energie an den Antrieb des Werkstückhalters verhindern oder beenden und somit eine für den Benutzer gefährliche Bewegung des Werkstückhalters unterbinden.

Bei einer vorteilhaften Weiterbildung der Erfindung ist vorgesehen, dass der Sender für die Bereitstellung und der Empfänger für den Empfang mehrerer, insbesondere parallel ausgerichteter, Kontrollstrahlen ausgebildet sind. Hierdurch kann die Absicherung eines dreidimensionalen Bereichs um die Schwenkachse oder nahe der Schwenkachse erreicht werden. Ferner ist hierdurch bei geeigneter Anordnung der Sender und Empfänger eine Kombination unterschiedlicher Detektionsfunktionen für unterschiedliche Verfahrensschritte während der Umformung des Werkstücks möglich. Beispielsweise wird durch das Werkstück bereits beim Zuführen auf den Werkstücktisch wenigstens ein erster Kontrollstrahl unterbrochen, so dass ein zunächst blockierter Antrieb für den Werkstückhalter von der Steuereinrichtung für eine Bewegung freigegeben werden kann und die Festlegung des Werkstücks nach einer entsprechenden Eingabe des Bedieners in die Steuereinrichtung möglich ist. Hier kann insbesondere vorgesehen sein, dass der wenigstens eine bereits beim Zuführen des Werkstücks unterbrochene Kontrollstrahl und der zugehörige Empfänger bei der weiteren Bearbeitung des Werkstücks nicht mehr berücksichtigt werden, diese Funktion wird auch als "Ausblendung" bezeichnet. Bei der nachfolgend vorzunehmenden Ausrichtung des Werkstücks gegenüber der Biegewange, die vor der endgültigen Festlegung mit Hilfe des Werkstückhalters erfolgt, wird mit wenigstens einem weiteren Kontrollstrahl der Bereich um die Schwenkachse der Biegewange von der Steuereinrichtung überwacht, um einen Eingriff eines oder mehrerer Finger des Bedieners zu detektieren und gegebenenfalls eine Abschaltung des Antriebs für den Werkstückhalter vorzunehmen. Nachdem das Werkstück mittels des Werkstückhalters festgelegt wurde, kann für die nachfolgende Schwenkbewegung der Biegewange die Überwachung des Bereichs um die Schwenkachse der Biegewange ausgesetzt werden oder es kann zumindest zeitweilig eine Überwachung des Biegebereichs mittels eines entsprechend angeordneten Kontrollstrahls vorgenommen werden.

In weiterer Ausgestaltung der Erfindung ist der Sender zur Bereitstellung von wenigstens zwei, insbesondere parallelen, Kontrollstrahlen ausgebildet, die derart ausgerichtet sind, dass sie eine Bewegungsbahn des beweglich am Maschinenbett angebrachten Werkstückhalters schneiden. Die Bewegungsbahn des Werkstückhalters wird durch die Lagerung des Werkstückhalters am Maschinenbett bestimmt, bei der es sich exemplarisch um eine Geradführung oder um eine Schwenklagerung handeln kann. Die beiden Kontrollstrahlen sind so angeordnet, dass sie die Bewegungsbahn schneiden. Damit kann für unterschiedliche Stellungen des Werkstückhalters zwischen einer Ruhestellung, in der eine Werkstückzufuhr auf den Werkstücktisch vorgesehen ist, und einer Funktionsstellung, in der eine Festlegung des Werkstücks vorgesehen ist, jeweils eine Überwachung des Bereichs um die Schwenkachse der Biegewange stattfinden. Hierbei wird insbesondere überwacht, ob ein Bediener mit einem Körperteil, insbesondere mit einem oder mehreren Fingern, die Bewegungsbahn des Werkstückhalters kreuzt und dadurch in die Gefahr gerät, zwischen Werkstückhalter und Werkstück oder zwischen Werkstück und Werkstücktisch eingeklemmt zu werden. Exemplarisch kann Bewegungsbahn anhand der Bewegung einer der Biegewange zugewandten Vorderkante des Werkstückhalters bestimmt werden. Die wenigstens zwei Kontrollstrahlen schneiden diese Bewegungsbahn oder eine parallel um einen vorgebbaren Betrag zu dieser Bewegungsbahn versetzte weitere Bewegungsbahn.

Bevorzugt ist die Bewegungsbahn der Vorderkante des Werkstückhalters als Gerade oder als Kreisbahnabschnitt ausgebildet und/oder sind die quer zur Bewegungsbahn ausgerichteten Kontrollstrahlen äquidistant zueinander angeordnet. Die Bewegungsbahn ist bei einer Ausgestaltung der Lagerung des Werkstückhalters am Maschinenbett als Geradführung eine Gerade und bei einer Ausgestaltung der Lagerung des Werkstückhalters am Maschinenbett als Schwenklagerung ein Kreisbogenabschnitt. Bei einer äquidistanten Anordnung der Kontrollstrahlen kann eine zuverlässige Absicherung eines Gefahrenbereichs gewährleistet werden.

Vorteilhaft ist es, wenn wenigstens ein Kontrollstrahl beabstandet zur Bewegungsbahn der Vorderkante des Werkstückhalters angeordnet ist. Hierdurch wird auch bei einer raschen Bewegung des Werkstückhalters eine zuverlässige Abschaltung des Antriebs für den Werkstückhalter gewährleistet, sobald der Kontrollstrahl unterbrochen wird. Grundsätzlich muss für die Auswertung der Signale des Empfängers, für die Bereitstellung eines Abschaltbefehls für den Antrieb sowie für die tatsächliche Abbremsung des Antriebs bis zum Stillstand eine Reaktionszeit angenommen werden. Diese Reaktionszeit muss in Beziehung zu einer Bewegungsgeschwindigkeit des Werkstückhalters und zu einer maximal anzunehmenden Bewegungsgeschwindigkeit für ein Körperteil des Bedieners gesetzt werden, um daraus einen Mindestabstand zwischen der Vorderkante des Werkstückhalters und dem wenigstens einen Kontrollstrahl festzulegen, der der Sicherung der Schließbewegung zwischen Werkstückhalter und Werkstücktisch dient. Vorzugsweise ist der wenigstens eine Kontrollstrahl so weit von der Bewegungsbahn der Vorderkante des Werkstückhalters beabstandet angeordnet, dass stets eine zuverlässige Abschaltung des Antriebs für den Werkstückhalter gewährleistet ist.

Zweckmäßig ist es, wenn wenigstens ein Kontrollstrahl als bandförmiges Strahlenbündel ausgebildet ist. Damit kann ein vorgebbarer Raumabschnitt abgesichert werden, dessen Ausdehnung der Ausdehnung des Strahlenbündels entspricht.

Bei einer vorteilhaften Weiterbildung der Erfindung sind der Sender und der Empfänger drehfest am Maschinenbett angeordnet sind. Hierdurch wird eine einfache Aufbauweise für den Sender und den Empfänger gewährleistet, da diese ortsfest am Maschinenbett festgelegt sind.

Bei einer alternativen Weiterbildung der Erfindung sind der Sender und der Empfänger drehfest an der Biegewange angeordnet sind. Hierdurch kann eine Überwachung einer Gefahrenzone vor der Biegewange zumindest noch zeitweilig während des Schwenkvorgangs der Biegewange vorgenommen werden.

Die Aufgabe der Erfindung wird gemäß einem zweiten Aspekt durch ein Verfahren zum Betreiben einer Schwenkbiegemaschine nach der Erfindung gemäß Anspruch 10 gelöst. Hierbei ist vorgesehen, dass beim Zuführen und/oder Festlegen und/oder Deformieren eines Werkstücks eine Überwachung eines als Hüllzylinder um eine Schwenkachse der Biegewange ausgebildeten Kontrollbereichs mittels wenigstens eines Kontrollstrahls vorgenommen wird.

Eine vorteilhafte Ausführungsform der Erfindung ist in der Zeichnung dargestellt. Hierbei zeigt:
- Figur 1: eine Vorderansicht einer Schwenkbiegemaschine, die mit einem Sender und einem Empfänger zur Überwachung eines Kontrollbereichs um eine Schwenkachse der Biegewange ausgerüstet ist,
- Figur 2: eine schematische, teilweise geschnittene Seitenansicht der Schwenkbiegemaschine mit einer Ausschnittvergrößerung des Schwenkgelenks der Biegewange,
- Figur 3: die Schwenkbiegemaschine gemäß Figur 2 in einer Beladungsstellung,
- Figur 4: die Schwenkbiegemaschine gemäß Figur 2 in einer Ausgangsstellung für die Durchführung einer eines Deformationsvorgangs,
- Figur 5: die Schwenkbiegemaschine gemäß Figur 2 während der Durchführung des Deformationsvorgangs und
- Figur 6: die Schwenkbiegemaschine gemäß Figur 2 nach Beendigung des Deformationsvorgangs.

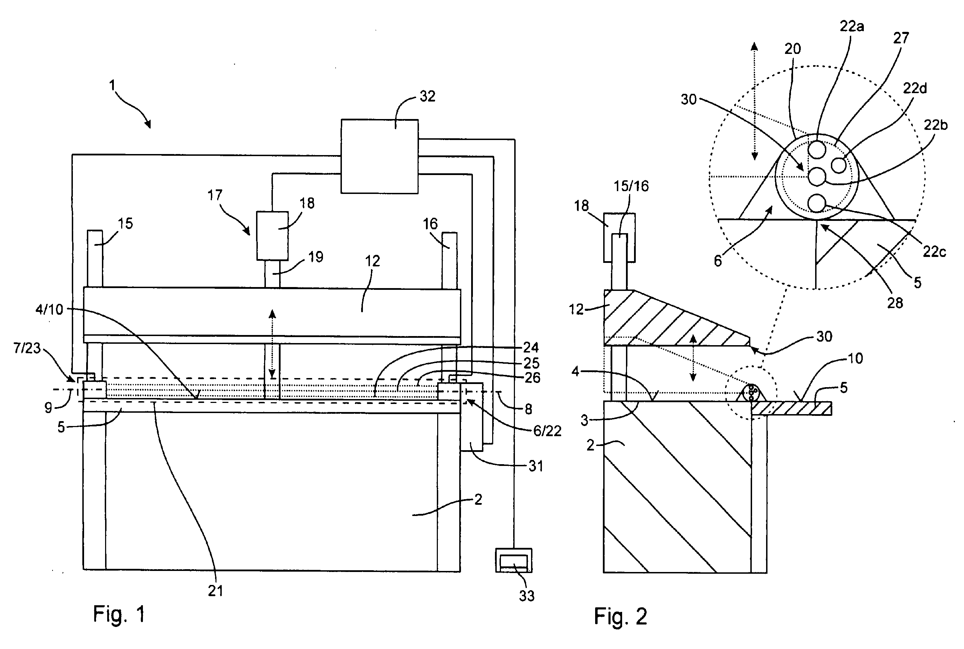

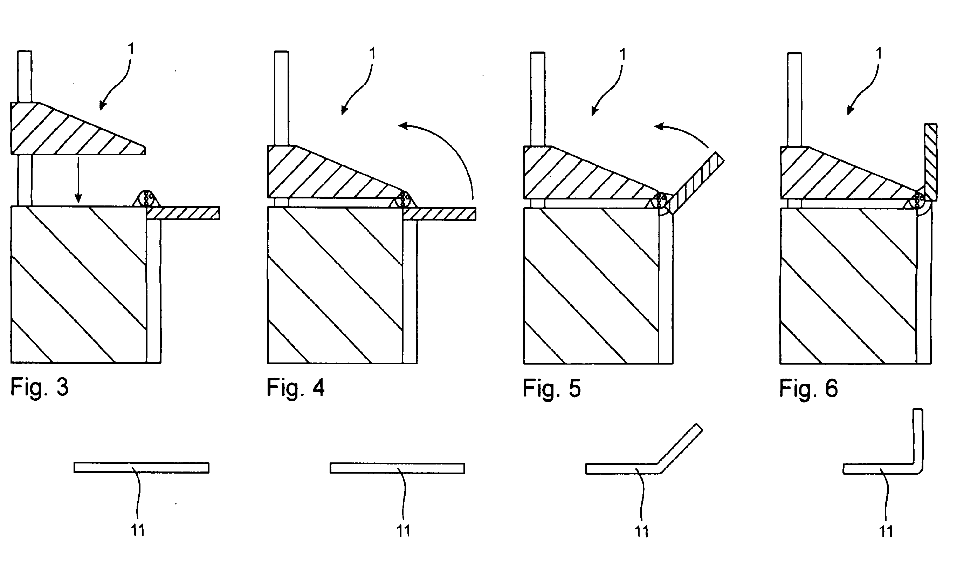

Eine in den Figuren 1 bis 6 dargestellte Schwenkbiegemaschine 1 umfasst ein Maschinenbett 2, an dem ein Werkstücktisch 3 ausgebildet ist, der eine exemplarisch eben ausgebildete Werkstückauflagefläche 4 umfasst. Ferner ist am Maschinenbett 2 eine Biegewange 5 schwenkbeweglich angeordnet, die sich mit einer längsten Kante längs der Werkstückauflagefläche 4 erstreckt. An einander entgegengesetzten Endbereichen ist die Biegewange 5 jeweils mit einem Schwenkgelenk 6, 7 am Maschinenbett 1 festgelegt. Jedes der Schwenkgelenke 6, 7 bestimmt eine Schwenkachse 8, 9, wobei die Schwenkachsen 8, 9 der Schwenkgelenke 6, 7 exemplarisch konzentrisch zueinander und parallel zur Werkstückauflagefläche 4 ausgerichtet sind. Eine Arbeitsfläche 10 der Biegewange 5 kann mittels eines Schwenkantriebs 31 durch eine Schwenkbewegung der Biegewange 5 aus der in den Figuren 1 bis 4 dargestellten Ruhestellung, in der die Arbeitsfläche 10 parallel und insbesondere flächenbündig zur Werkstückauflagefläche 5 angeordnet ist, in eine in der Figur 6 dargestellte Funktionsstellung verschwenkt werden. In der Funktionsstellung nimmt die Arbeitsfläche 10 exemplarisch einen rechten Winkel gegenüber der Werkstückauflagefläche 4 ein, andere Winkelstellungen sind ebenfalls möglich.

Zur Festlegung des jeweils unterhalb der Figuren 3 bis 6 angedeuteten, ursprünglich plattenförmigen Werkstücks 11 an dem Werkstücktisch 3 ist ein beweglich am Maschinenbett 2 angebrachter Werkstückhalter 12 vorgesehen. Der Werkstückhalter 12 ist beidseitig mit nicht dargestellten Führungsmitteln an Führungssäulen 15, 16 linearbeweglich geführt. Ein Abstand zwischen dem Werkstückhalter 12 und dem Werkstücktisch 3 kann mittels eines Spindelantriebs 17 eingestellt werden, der einen Elektromotor 18 und eine Antriebsspindel 19 umfasst.

Die Schwenkgelenke 6, 7 umfassen jeweils Hohlwellen 20, die zur Aufnahme von nachstehend näher beschriebenen Komponenten einer optischen Überwachungseinrichtung 21 dienen. Die optische Überwachungseinrichtung 21 ermöglicht die Überwachung der Schwenkbewegung der Biegewange 5 um die Schwenkachsen 8, 9 der Schwenkgelenke 6, 7. Die optische Überwachungseinrichtung 21 umfasst exemplarisch mehrere als Laserdioden ausgebildete optische Sender 22, die jeweils zur Aussendung eines Kontrollstrahls 24, 25 und 26 ausgebildet sind. Dabei sind die Sender 22 derart konfiguriert, dass die Kontrollstrahlen 24, 25, 26 in Form von parallelen Strahlenbündeln mit nahezu punktförmigem Querschnitt ausgesendet werden. Exemplarisch sind die Sender 22 derart ausgerichtet, dass die Kontrollstrahlen 24, 25, 26 parallel zueinander ausgerichtet sind. Vorzugsweise verlaufen die Kontrollstrahlen 24, 25, 26 parallel auch zur Werkstückauflagefläche sowie parallel zur Biegekante 28 der Biegewange 5.

Die den jeweiligen Sendern 22 gegenüberliegenden Empfänger 23 sind spiegelbildlich zu den Sendern 22 in einer der Darstellungsebene der Figur 2 entsprechenden Spiegelebene angeordnet, so dass auf eine diesbezügliche Darstellung der Empfänger 23 verzichtet werden kann.

Wie aus der Darstellung der Figur 2, insbesondere aus der zugehörigen Ausschnittvergrößerung, entnommen werden kann, sind dem Schwenkgelenk 6 insgesamt vier Sender 22, im Einzelnen als Sender 22a, 22b, 22c und 22d bezeichnet, zugeordnet. Dabei sind drei der Sender 22, im Einzelnen die Sender 22a, 22b und 22c, längs einer Bewegungsachse 29 des Werkstückhalters 12 angeordnet, wobei die Bewegungsachse 29 von der linearen Beweglichkeit des Werkstückhalters 12 bestimmt wird. Vorzugsweise sind die Sender 22a, 22b, 22c und 22d derart längs der Bewegungsachse 29 angeordnet, dass sie bei abgesenktem Werkstückhalter 12 nicht von diesem verdeckt werden. Ein weiterer Sender 22d ist versetzt zu den Sendern 22a, 22b und 22c angeordnet und weist einen größeren Abstand zum Werkstückhalter 12 auf als die anderen Sender 22a, 22b und 22c.

Jeder der Sender 22 sendet einen Kontrollstrahl 24, 25, 26 aus, wobei in der Darstellung der Figur 1 die Kontrollstrahlen 25 der beiden Sender 22b und 22d nicht voneinander unterscheidbar sind und daher mit dem gleichen Bezugszeichen versehen sind. Alle Kontrollstrahlen 24 bis 26 sind exemplarisch in einem Hüllzylinder 27 aufgenommen, der beispielhaft konzentrisch zu den Schwenkachsen 8, 9 der Schwenkgelenke 6, 7 angeordnet ist. Der Hüllzylinder 27 weist exemplarisch einen Durchmesser auf, der in Etwa dem 2-fachen der Materialstärke des Werkstücks 11 entspricht. Vorzugsweise ist der Hüllzylinder 27 in der Praxis so bemessen, dass bei eingelegten Werkstück 11 mit dem vom Sender 22a ausgehenden Kontrollstrahl 24 ein Bereich zwischen Werkstückhalter 12 und Werkstück 11 überwacht werden kann, der so gewählt ist, dass ein Bediener seine Hand nicht in diesen Bereich bewegen kann, ohne den Kontrollstrahl 24 zu unterbrechen.

Beispielhaft sind die Sender 22b und 22c dazu vorgesehen, die Anwesenheit eines Werkstücks 11 zu detektieren. Dementsprechend sind die Sender 22b und 22c derart im Schwenkgelenk 6 angeordnet, dass die von diesen Sendern 22b, 22c ausgehenden Kontrollstrahlen unterbrochen werden, sobald das Werkstück 11 in den Spalt zwischen der Werkstückauflagefläche 4 und dem Werkstückhalter 12 eingeschoben wird. Die Sender 22a und 22d dienen dazu, das Umfeld der Vorderkante 30 des Werkstückhalters 12 nach Einlegen des Werkstücks 11, insbesondere bei der Annäherung des Werkstückhalters 12 an das Werkstück 11 und gegebenenfalls bei der Einleitung der Schwenkbewegung in die Biegewange 5, abzusichern.

Für die Einleitung der Schwenkbewegung auf die Biegewange 5 ist der Schwenkantrieb 31 vorgesehen, der exemplarisch als elektrischer Getriebemotor ausgebildet und am Maschinenbett 2 festgelegt ist und der mit einer Steuereinrichtung 32 gekoppelt ist.

Die Steuereinrichtung 32 ist ferner mit den Sendern 22, den Empfängern 23 und mit dem Elektromotor 18 des Spindelantriebs 17 verbunden. Die Steuereinrichtung ist zudem mit einem als Fußschalter ausgebildeten Betätigungsmittel 33 verbunden, das eine Inbetriebnahme der Schwenkbiegemaschine 1 durch einen nicht dargestellten Bediener ermöglicht.

Ein Verfahren zum Betreiben einer Schwenkbiegemaschine 1 kann exemplarisch in der folgenden Weise durchgeführt werden. Ausgehend von einer in der Figur 3 dargestellten Ruhestellung wird zunächst vom Bediener ein plattenförmiges Werkstück 11 auf die Werkstückauflagefläche 4 der Schwenkbiegemaschine 1 aufgelegt. Hierbei werden der Kontrollstrahl 26 des Senders 22c und der Kontrollstrahl 25 des Senders 22b durchbrochen, so dass die Steuereinrichtung 32 Kenntnis die Anwesenheit eines Werkstücks 11 im Spalt zwischen Werkstückauflagefläche 4 und Werkstückhalter 12 detektieren kann.

In einem nachfolgenden Schritt betätigt der Bediener das Betätigungsmittel 33, wodurch in der Steuereinrichtung 32 ein Signal zur Ansteuerung des Elektromotors 18 des Spindelantriebs 17 erzeugt wird, sofern weder der Kontrollstrahl 24 des Senders 22a noch der aus Gründen der zeichnerischen Darstellung ebenfalls mit 25 bezeichnete Kontrollstrahl des Senders 22d unterbrochen ist oder wird. Für den Fall einer Unterbrechung der Kontrollstrahlen 24 oder 25 der Sender 22a oder 22d muss die Steuereinrichtung 32 davon ausgehen, dass der Bediener in den Bereich zwischen das Werkstück 11 und den Werkstückhalter 12 eingreift und damit bei einer weiteren Bewegung des Werkstückhalters 12 gefährdet ist. Exemplarisch ist der Sensor 22a derart angeordnet, dass nur dann eine Unterbrechung des zugehörigen Kontrollstrahls 24 erfolgt, wenn der Bediener in einen Bereich eingreift, in dem eine konkrete Quetschgefahr zwischen Werkstückhalter 12 und Werkstück 11 besteht.

Sofern die Annäherung des Werkstückhalters 12 an das Werkstück 11 ohne eine Unterbrechung einer der Kontrollstrahlen 24, 25 der Sender 22a und 22d erfolgt ist, ist das Werkstück 11 zwischen dem Werkstücktisch 3 und dem Werkstückhalter 12 geklemmt und ist somit für die weitere Bearbeitung festgelegt. Nach kurzem Lösen des Betätigungsmittels 33, was von der Steuereinrichtung 32 als Bestätigung des Bedieners hinsichtlich der erfolgreichen Festlegung des Werkstücks 11 interpretiert wird, erfolgt bei neuerlichem Betätigen des Betätigungsmittels, sofern die Kontrollstrahlen 24 und 25 der Sender 22a und 22d weiterhin nicht unterbrochen sind, eine Ansteuerung des Schwenkantriebs 31. Hierdurch wird die Biegewange 5 um die Schwenkachsen 8, 9 verschwenkt und vollzieht eine plastische Deformation des Werkstücks 11 bis zu einem vorgebbaren Biegewinkel, exemplarisch um 90 Grad.

Im Verlauf des Biegevorgangs werden der Kontrollstrahl 26 des Senders 22d und der Kontrollstrahl 24 des Senders 22a durch das Werkstück 11 zu vorbestimmbaren Zeitpunkten unterbrochen. Kurz vor Erreichen der jeweiligen Zeitpunkte werden von der Steuereinrichtung 32 die Überwachungen der jeweiligen Empfänger 23 ausgesetzt oder "ausgeblendet", so dass eine Unterbrechung der Kontrollstrahlen 24, 25 der Sender 22a, 22d nicht zu einer Abschaltung des Schwenkantriebs 31 führt.

Somit ist ab dem Zeitpunkt des Einlegens des Werkstücks 11 bis zumindest nahezu zur Beendigung des Umformvorgangs für das Werkstück 11 mittels der Schwenkbiegemaschine 1 eine Überwachung des sicherheitskritischen Bereichs um die Schwenkachse der Biegewange 5 gewährleistet.

## Patentansprüche

1. Schwenkbiegemaschine mit einem Maschinenbett (2), das einen Werkstücktisch (3) mit einer Werkstückauflagefläche (4) umfasst, sowie mit einem beweglich am Maschinenbett (2) angebrachten Werkstückhalter (12) zur Festlegung eines Werkstücks (11) am Werkstücktisch (3) und mit einer schwenkbeweglich dem Werkstücktisch (3) zugeordneten, längs der Werkstückauflagefläche (4) erstreckten Biegewange (5), die an einander entgegengesetzten Endbereichen jeweils mit einem Schwenkgelenk (6, 7) am Maschinenbett (2) festgelegt ist, wobei Schwenkachsen (8, 9) der Schwenkgelenke (6, 7) konzentrisch zueinander und parallel zur Werkstückauflagefläche (4) ausgerichtet sind, sowie mit einer optischen Überwachungseinrichtung (21) zur Überwachung einer Schwenkbewegung der Biegewange (5), mit einem optischen Sender (22) zur Aussendung eines Kontrollstrahls (24, 25, 26) und mit einem dem Sender (22) gegenüberliegend angeordneten Empfänger (23) für den Kontrollstrahl (24, 25, 26), **dadurch gekennzeichnet, dass** der Sender (22) und der Empfänger (23) den Schwenkgelenken (6, 7) derart zugeordnet sind, dass der Kontrollstrahl (24, 25, 26) zwischen Sender (22) und Empfänger (23) in einem um die Schwenkachse (6, 7) ausgebildeten Hüllzylinder (27) verläuft.

2. Schwenkbiegemaschine nach Anspruch 1, **dadurch gekennzeichnet, dass** der Sender (22) in einem ersten Schwenkgelenk(₆) der Biegewange (5) und der Empfänger (23) einem zweiten Schwenkgelenk (7) der Biegewange (5) angeordnet sind.

3. Schwenkbiegemaschine nach Anspruch 1 oder 2, **dadurch gekennzeichnet, dass** der Sender (22) für die Bereitstellung und der Empfänger (23) für den Empfang mehrerer, insbesondere parallel ausgerichteter, Kontrollstrahlen (24, 25, 26) ausgebildet sind.

4. Schwenkbiegemaschine nach Anspruch 1, 2 oder 3, **dadurch gekennzeichnet, dass** der Sender (22) zur Bereitstellung von wenigstens zwei, insbesondere parallelen, Kontrollstrahlen (24, 25, 26) ausgebildet, die derart ausgerichtet sind, dass sie eine Bewegungsbahn (29) des beweglich am Maschinenbett (2) angebrachten Werkstückhalters (12) schneiden.

5. Schwenkbiegemaschine nach Anspruch 4, **dadurch gekennzeichnet, dass** die Bewegungsbahn (29) der Vorderkante (30) des Werkstückhalters (12) als Gerade oder als Kreisbahnabschnitt ausgebildet ist und/oder dass die quer zur Bewegungsbahn (29) ausgerichteten Kontrollstrahlen (24, 25, 26) äquidistant zueinander angeordnet sind.

6. Schwenkbiegemaschine nach Anspruch 4 oder 5, **dadurch gekennzeichnet, dass** wenigstens ein Kontrollstrahl (25) beabstandet zur Bewegungsbahn (29) der Vorderkante (30) des Werkstückhalters (12) angeordnet ist.

7. Schwenkbiegemaschine nach einem der vorhergehenden Ansprüche, **dadurch gekennzeichnet, dass** wenigstens ein Kontrollstrahl als bandförmiges Strahlenbündel ausgebildet ist.

8. Schwenkbiegemaschine nach einem der vorhergehenden Ansprüche, **dadurch gekennzeichnet, dass** der Sender (22) und der Empfänger (23) drehfest am Maschinenbett (2) angeordnet sind.

9. Schwenkbiegemaschine nach einem der Ansprüche 1 bis 7, **dadurch gekennzeichnet, dass** der Sender (22) und der Empfänger (23) drehfest an der Biegewange (5) angeordnet sind.

10. Verfahren zum Betreiben einer Schwenkbiegemaschine (1) nach einem der vorhergehenden Ansprüche, **dadurch gekennzeichnet, dass** beim Zuführen und/oder Festlegen und/oder Deformieren eines Werkstücks (11) eine Überwachung eines als Hüllzylinder (27) um eine Schwenkachse (6, 7) der Biegewange (5) ausgebildeten Kontrollbereichs mittels wenigstens eines Kontrollstrahls (24, 25, 26) vorgenommen wird.

## Claims

1. Swivel bending machine with a machine bed (2), comprising a worktable (3) with a workpiece supporting surface (4), as well as a workpiece holder (12) attached movably to the machine bed (2) for fixing a workpiece (11) to the worktable (3) and with a swivelling bending cheek (5) assigned to the worktable (3) and extending along the workpiece supporting surface (4) and fastened to the machine bed (2) at each of its opposite end sections by a swivel joint (6, 7), wherein swivel axes (8, 9) of the swivel joints (6, 7) are aligned concentric to one another and parallel to the workpiece supporting surface (4), with an optical monitoring device (21) for monitoring a swivelling movement of the bending cheek (5), with an optical transmitter (22) for emitting a monitoring beam (24, 25, 26) and with a receiver (23) for the monitoring beam (24, 25, 26) arranged opposite the transmitter (22), **characterised in that** the transmitter (22) and the receiver (23) are so assigned to the swivel joints (6, 7) that the monitoring beam (24, 25, 26) runs between transmitter (22) and receiver (23) in an envelope cylinder (27) formed around the swivel axis (6, 7).

2. Swivel bending machine according to claim 1, **characterised in that** the transmitter (22) is mounted in a first swivel joint (6) of the bending cheek (5) and the receiver (23) in a second swivel joint (7) of the bending cheek (5).

3. Swivel bending machine according to claim 1 or 2, **characterised in that** the transmitter (22) is designed for the provision and the receiver (23) for the receiving of several monitoring beams (24, 25, 26), in particular with parallel alignment.

4. Swivel bending machine according to claim 1, 2 or 3, **characterised in that** the transmitter (22) is designed for the provision of at least two, in particular parallel, monitoring beams (24, 25, 26) which are so aligned that they intersect a movement path (29) of the work holder (12) attached movably to the machine bed (2).

5. Swivel bending machine according to claim 4, **characterised in that** the movement path (29) of the front edge (30) of the work holder (12) is in the form of a straight line or a circular path section and/or that the monitoring beams (24, 25, 26) aligned transversely to the movement path (29) are arranged equidistant from one another.

6. Swivel bending machine according to claim 4 or 5, **characterised in that** at least one monitoring beam (25) is arranged at a distance from the movement path (29) of the front edge (30) of the work holder (12).

7. Swivel bending machine according to any of the preceding claims, **characterised in that** at least one monitoring beam is in the form of a ribbon-like beam of rays.

8. Swivel bending machine according to any of the preceding claims, **characterised in that** the transmitter (22) and the receiver (23) are mounted non-rotatably on the machine bed (2).

9. Swivel bending machine according to any of claims 1 to 7, **characterised in that** the transmitter (22) and the receiver (23) are mounted non-rotatably on the bending cheek (5).

10. Method of operating a swivel bending machine (1) according to any of the preceding claims, **characterised in that** in the feeding and/or fixing and/or deforming of a workpiece (11), monitoring of a monitoring zone in the form of an envelope cylinder (27) around a swivel axis (6, 7) of the bending cheek (5) is undertaken by means of at least one monitoring beam (24, 25, 26).

## Revendications

1. Presse plieuse avec un banc de machine (2) qui comporte une table porte-pièce (3) avec une surface d'appui de pièce (4), ainsi qu'avec un support de pièce (12) monté de manière mobile sur le banc de machine (2) pour la fixation d'une pièce (11) sur la table porte-pièce (3) et avec une barre de pliage (5) étirée le long de la surface d'appui de pièce (4), associée de manière pivotante à la table porte-pièce (3), qui est fixée sur des zones d'extrémité opposées respectivement avec une articulation pivotante (6, 7) sur le banc de machine (2), des axes de pivotement (8, 9) des articulations pivotantes (6, 7) étant orientés de manière concentrique l'un à l'autre et parallèlement à la surface d'appui de pièce (4), ainsi qu'avec un dispositif de surveillance (21) optique pour la surveillance d'un mouvement de pivotement de la barre de pliage (5), avec un émetteur optique (22) pour l'émission d'un rayon de contrôle (24, 25, 26) et avec un récepteur (23) disposé en regard de l'émetteur (22) pour le rayon de contrôle (24, 25, 26), **caractérisée en ce que** l'émetteur (22) et le récepteur (23) sont associés aux articulations pivotantes (6, 7) de telle manière que le rayon de contrôle (24, 25, 26) s'étende entre l'émetteur (22) et le récepteur (23) dans un cylindre externe (27) réalisé autour de l'axe de pivotement (6, 7).

2. Presse plieuse selon la revendication 1, **caractérisée en ce que** l'émetteur (22) est disposé dans une première articulation pivotante (6) de la barre de pliage (5) et le récepteur (23) est disposé dans une seconde articulation pivotante (7) de la barre de pliage (5).

3. Presse plieuse selon la revendication 1 ou 2, **caractérisée en ce que** l'émetteur (22) est réalisé pour la mise à disposition et le récepteur (23) est réalisé pour la réception de plusieurs rayons de contrôle (24, 25, 26) orientés en particulier parallèlement.

4. Presse plieuse selon la revendication 1, 2 ou 3, **caractérisée en ce que** l'émetteur (22) est réalisé pour la mise à disposition d'au moins deux rayons de contrôle (24, 25, 26) en particulier parallèles qui sont orientés de telle manière qu'ils coupent une voie de déplacement (29) du support de pièce (12) monté de manière mobile sur le banc de machine (2).

5. Presse plieuse selon la revendication 4, **caractérisée en ce que** la voie de déplacement (29) de l'arête avant (30) du support de pièce (12) est réalisée comme une droite ou comme une section de voie circulaire et/ou **en ce que** les rayons de contrôle (24, 25, 26) orientés transversalement à la voie de déplacement (29) sont disposés de manière équidistante les uns aux autres.

6. Presse plieuse selon la revendication 4 ou 5, **caractérisée en ce qu'**au moins un rayon de contrôle (25) est disposé à distance de la voie de déplacement (29) de l'arête avant (30) du support de pièce (12).

7. Presse plieuse selon l'une quelconque des revendications précédentes, **caractérisée en ce qu'**au moins un rayon de contrôle est réalisé comme un faisceau de rayons en forme de bande.

8. Presse plieuse selon l'une quelconque des revendications précédentes, **caractérisée en ce que** l'émetteur (22) et le récepteur (23) sont disposés sans pouvoir tourner sur le banc de machine (2).

9. Presse plieuse selon l'une quelconque des revendications 1 à 7, **caractérisée en ce que** l'émetteur (22) et le récepteur (23) sont disposés sans pouvoir tourner sur la barre de pliage (5).

10. Procédé de fonctionnement d'une presse plieuse (1) selon l'une quelconque des revendications précédentes, **caractérisée en ce que** lors de l'amenée et/ou de la fixation et/ou de la déformation d'une pièce (11), une surveillance d'une zone de contrôle réalisée comme un cylindre externe (27) autour d'un axe de pivotement (6, 7) de la barre de pliage (5) est réalisée à l'aide d'au moins un rayon de contrôle (24, 25, 26).
